# EUROPEAN PATENT APPLICATION

(11) **EP 4 201 880 A1**
(43) Date of publication of application: **28.06.2023**
(21) Application number: 21217678.8
(22) Date of filing: 24.12.2021
(51) Int. Cl.: C01B 25/32

(54) **PROCESS FOR PRODUCING A PHOSPHATE CONTAINING PRODUCT FROM A PHOSPHATE SOURCE**

(71) Applicant: Prayon, 4480 Engis (BE)
(72) Inventor: HENRY, Thomas, 4480 Engis (BE); THEYS, Tibaut, 4480 Engis (BE)
(74) Representative: Connor, Marco Tom

(57) **Abstract**

The present invention concerns a process for producing a phosphate containing product from a phosphate source (P0), the process comprising the following steps:
• feeding **aone or more reactors** with a **raw material (PC1)** comprising phosphate in amounts of at least 5 wt.% P₂O₅, and calcium in amounts of at least 0.7 wt.% CaO,
• digesting the raw material (PC1) with a digestion liquor (L) in the one or more reactors, wherein the digestion liquor (L),
∘ is an aqueous solution of sulphuric acid (H₂SO₄) and a mineral acids (HX), in a ratio (H⁺(SA) / H⁺(L) comprised between 2 and 75%, wherein H⁺(SA) and H⁺(L) are the mole content of H⁺ issued from the sulphuric acid and the digestion liquor (L), respectively,
∘ is added to the raw material (PC1) to form a digested suspension (PC2) in amounts such that the molar ratio H⁺(L) / Ca is comprised between 0.8 and 1.95, wherein Ca is the mole content of calcium present in the digested suspension (PC2), and

• separating the digested suspension (PC2) into, on the one hand, the aqueous phosphate rich solution (P1) and, on the other hand, the first solid phase (C1).

## Description

### FIELD OF THE INVENTION

The present invention relates to a process for producing a phosphate containing product from a phosphate source (P0). The phosphate source can comprise phosphate ores or ashes from different origins, industrial or municipal. The present invention enhances filtration after digestion of the raw material issued from the phosphate source and prevents losses of P₂O₅ in the cake with CaSO₄.nH₂O while maintaining an acceptable efficacy.

### BACKGROUND OF THE INVENTION

Phosphate sources can be issued from ore, typically containing apatite, or from ashes from the incineration of sewage, animal bones, and the like. These phosphate sources comprise numerous other components which need be separated to reach the levels of purity required by the corresponding end applications. To this purpose, raw material issued from the phosphate source can be digested in a first step in a digestion liquor to solubilize the phosphate ions and maintain as many other components as possible insoluble. This digestion step is often followed by a separation step, to separate a solid residue mainly composed of insoluble components from a liquid filtrate containing the dissolved phosphates. The selection of the conditions used in this first step, including the composition of the digestion liquor, the duration of the digestion, the temperature, the pH, etc., is often a trade-off between ensuring that all the phosphates present in the raw material are indeed solubilized and present in the liquid filtrate after separation, and preventing as many other components as possible from solubilizing too and thus remaining in the solid residue. If the digestion is too weak, phosphates can be retained in the raw material in the insoluble form and if, on the other hand, digestion is too strong, many impurities will be dissolved too and entrained with the phosphates in the liquid filtrate.

Most ores and many ashes comprise certain amounts of CaO and / or sulphates (SO₄²⁻). Undesired calcium can be precipitated as calcium sulphates (= CaSO₄.nH₂O) by addition of sulphuric acid (= H₂SO₄). Digesting the raw material with sulphuric acid alone can, however, be detrimental to the efficacy of the process, and co-precipitation of calcium phosphates may occur. IN particular, addition of sulphuric acid introduces sulphate ions (SO₄²⁻) which need be eliminated and may require in some cases addition of Ca²⁺ ions to precipitate calcium sulphates (CaSO₄.nH₂O) with different degrees of hydration (i.e., n = 0 to 2). If calcium sulphates co-precipitate with substantial amounts of P₂O₅, the yield in phosphates is decreased accordingly, as they cannot easily be dissociated after co-precipitation. The reaction of calcium phosphates (Ca₃(PO₄)₂) with sulphuric acid (H₂SO₄) yields more calcium sulphates than phosphoric acid, i.e., more side products than end-products.

Ca₃(PO₄)₂ + 3 H₂SO4 +6H2O → 3 CaSO₄.2H₂O +2 H₃P0₄

Digesting raw material with sulphuric acid may also lead to the formation of hemihydrate or anhydride calcium sulphate. Calcium sulphate hemihydrate (= CaSO_{4.}½H₂O) is prompt to rehydrate and set to form dihydrate plaster (= CaSO₄.2H₂O) which can block the production line, generating extra costs either by stopping the production for the time required to unclog and clean the equipment or by including spare pieces of equipment to switch the production through the spare pieces. Anhydride (= CaSO₄) is difficult to filter, thus hindering the separation of liquid from solid phases.

Digestion liquors comprising hydrochloric acid (= HCI) alone are used in the art. HCI has the major inconvenient of introducing chlorine (Cl⁻) into the system, which is banned from many applications. As HCI is a strong acid, the equipment, such as reactors, tanks, tuns, tubing must be made of corresponding resistant materials, which increases the cost of the production line accordingly. Finally, HCI dissolves components forming soluble salts without forming precipitates, such that all that is dissolved from the raw material is present in the liquid filtrate together with the phosphates.

Phosphoric acid (= H₃PO₄) is also commonly used in digestion liquors. Like HCI, H₃PO₄ dissolves components forming soluble salts without forming precipitates, such that all that is dissolved from the raw material is present in the liquid filtrate together with the phosphates. Phosphoric acid is a weaker acid than H₂SO₄ or HCI discussed supra, which could lead to dissolution of only part of the phosphates present in the raw material.

EP3066048 proposes to first digest ashes with phosphoric acid and / or nitric acid, separate the solid from the liquid filtrate, and reacting in a separate step the liquid filtrate with sulphuric acid (= H₂SO₄) to precipitate calcium sulphates (= CaSO₄.nH₂O). Similarly, EP3296258 describes a similar two- (or more-) step process. These processes require two consecutive digestions, requiring heavy apparatuses, various reactants and longer times.

There is a need in the art for a simple nd reliable process for extracting phosphates efficiently from a raw material containing certain amounts of undesired CaO. The present invention proposes such simple process which allows undesired calcium to be precipitated as calcium sulphate without impairing the efficacy of the process. The separation by filtration step which follows is thus facilitated by the presence in the solid of crystallized compounds. These and other advantages of the present invention are explained more in detail in the following sections.

### SUMMARY OF THE INVENTION

The objectives of the present invention have been reached with a process for producing a phosphate containing product from a phosphate source (P0), the process comprising the following steps:
- feeding one or more reactors with at least one raw material (PC1) issued from the phosphate source (P0), the at least one raw material comprising a phosphate required amount expressed in equivalent P₂O₅ amounts (= wt.% P₂O₅) of at least 5 wt.% P₂O₅, and a required calcium amount expressed in equivalent CaO amounts (= wt.% CaO) of at least 0.7 wt.% CaO,
- in a digestion step (D1), digesting the at least one raw material (PC1) with a digestion liquor (L) in the one or more reactors, wherein the digestion liquor (L),
   ∘ is an aqueous solution of sulphuric acid (H₂SO₄) and of one or more mineral acids (HX), wherein a ratio (H⁺(SA) / H⁺(L)) of a mole content of H⁺ issued from the sulphuric acid (= H⁺(SA)) to a total mole content of H⁺ ions in the digestion liquor (L) (= H⁺(L)) is comprised between 2 and 75%,
   ∘ is added to the at least one raw material (PC1) in amounts such that a molar ratio (H⁺(L) / Ca) of the total amount of H⁺ ions in the digestion liquor (L) (= H⁺(L)) to a total amount of Ca atoms (= Ca) present in both digestion liquor (L) and at least one raw material (PC1) is comprised between 0.8 and 1.95 (i.e., H⁺(L) / Ca = 0.8 - 1.95), to form a digested suspension (PC2) comprising an aqueous phosphate rich solution (P1) comprising phosphate ions and a first solid phase (C1) containing calcium sulphate and impurities,
- In a separation step (S1), separating the digested suspension (PC2) into, on the one hand, the aqueous phosphate rich solution (P1) and, on the other hand, the first solid phase (C1).

In a preferred embodiment, the solid phosphate source (P0) either:
- contains calcium in an amount of at least the required calcium amount and thus forms the at least one raw material (PC1) (i.e., PC1 = P0), or
- contains less than the required calcium amount, and the at least one raw material (PC1) is formed in a **raw material formation step (M0)** by addition of a calcium compound (C0) to the phosphate source (P0) to form the at least one raw material (PC1) with the required amounts of calcium (i.e., PC1 c P0 + C0), wherein the calcium compound is chosen among:
   ∘ lime derivatives including quick lime, slaked lime, pulverized lime, lime milk, finely ground limestone as pure product or as residue,
   ∘ calcium carbonate,
   ∘ calcium phosphates salts (mono -; di-; tri-),
   ∘ kaolin,
   ∘ calcium hydroxide,
   ∘ calcium sulphate,
   ∘ calcium fluoride,
   ∘ a second phosphate source (P02) containing calcium,
   ∘ the aqueous phosphate rich solution (P1),
   ∘ phosphoric acid,or
   ∘ a mixture thereof.

The one or more mineral acids (HX) can be chosen among hydrochloric acid, phosphoric acid, fluosilic acid, hydrofluoric acid, the aqueous phosphate rich solution (P1), the wash filtrate of the residue or a combination thereof, and preferably comprises hydrochloric acid, more preferably, hydrochloric acid alone.

In a preferred embodiment, a portion of the aqueous phosphate rich solution (P1) is recirculated into the digestion step (D1) as a component of the digesting liquor or as a calcium source, wherein the portion of the aqueous phosphate rich solution (P1) being recirculated is preferably comprised between 1 and 50%, more preferably between 5 and 30%, most preferably between 10 and 20%.

The at least one raw material (PC1) can comprise phosphate in amounts comprised between 10 and 50wt.% P₂O₅, preferably between 12 and 45 wt.% P₂O₅, more preferably between 14 and 40 wt.% P₂O₅, more preferably between 15 and 38 wt.% P₂O₅, more preferably between 18 and 35 wt.% P₂O₅, more preferably between 19 and 30 wt.% P₂O₅, more preferably between 20 and 27.5 wt.% P₂O₅, more preferably between 22.5 and 25 wt.% P₂O₅.

The at least one raw material (PC1) can comprise hydroxy and / or fluoro apatite in amounts comprised between 4wt.% and 91.5 wt.%, preferably between 10 and 90 wt.%, more preferably between 15 and 85 wt.% P₂O₅, most preferably between 20 and 75 wt.%, preferably between 40 and 60 wt.%.

The phosphate source (P0) can be chosen among one or more of the following origins:
- phosphate ores,
- phosphate salts,
- ashes, preferably ashes from one or more of incinerated sewage sludge, bones, manure.

The phosphate source (P0) can be used alone or admixed with a second phosphate source (P02) of different origin than the phosphate source, wherein the admixing occurs either prior to feeding into the one or more reactors, or in the one or more reactors.

An advantage of the present invention is that the the digestion step (D1) can occur at atmospheric pressure and at a temperature lower than 100°C, preferably lower than 70°C, more preferably between 30°C and 65°C; more preferably between 40°C and 60°C; more preferably between 45°C and 50°C. The digestion step (D1) can have a duration lower than 180 min, preferably lower than 90 min, more preferably lowerthan 60 min, more preferably lowerthan 45 min, and wherein the duration is preferably at least 5 min, more preferably at least 10 min.

A combined concentration of the sulphuric acid and the one or more mineral acids in the digestion liquor (L) is preferably less than 20 wt.%, preferably less than 15 wt.%, more preferably less than 10 wt.%, and is preferably at least 2%, more preferably at least 5%.The ratio (H⁺(SA) / H⁺(L)) of the mole content of H⁺ issued from the sulphuric acid (= H⁺(SA)) to the total amount of H⁺ ions in the digestion liquor (L) (= H⁺(L) is preferably comprised between 5% and 70%, preferably between 7% and 60%, more preferably between 10 and 50%, more preferably between 12% and 40%; more preferably between 15% and 30%, most preferably between 18% and 25%.

In the digesting (D1) step, a molar ratio (H⁺(L)/ Ca) of the H⁺-ions (H⁺(L)) in the digestion liquor (L) to the calcium atoms in both digestion liquor and at least one raw material (PC1) can be comprised between 1.3 and 1.9, preferably 1,7 and 1,8, more preferably between 1.5 and 1.6.

The process can comprise an additional step, wherein the aqueous phosphate rich solution (P1) is neutralized in a neutralizing step (N1) to form dicalcium phosphate (DCP), wherein the neutralisation step (N1) is performed in presence of a source of calcium (B1) to reach a pH preferably comprised between 3 and 6, wherein the source of calcium (B1) is chosen among,
- lime derivatives including quick lime, slaked lime, pulverized lime, lime milk,
- calcium carbonate or finely ground limestone,
- calcium hydroxide,
- calcium phosphate, or
- a mixture thereof.

The DCP thus produced can be further processed to produce,
- a fertilizer, preferably of type monoammonium phosphate (MAP), diammonium phosphate (DAP), Ammonium-Potassium Phosphate fertilizer (NPK fertilizer),
- animal feed,
- food grade products,
- merchant grade or purified phosphoric acid or technical grade phosphoric acid.

In a preferred embodiment, the one or more reactors are fed with,:
- the digestion liquor formed by mixing the aqueous solution of sulphuric acid (H₂SO₄) and the aqueous solution of one or more mineral acids (HX) prior to feeding into the one or more reactors; or
- the aqueous solution of sulphuric acid (H₂SO₄) first, followed by the aqueous solution of one or more mineral acids (HX),
- the aqueous solution of one or more mineral acid (HX) first, followed by the aqueous solution of sulphuric acid (H₂SO₄),

. With substantial amounts of impurities, the process is more efficient if as much P2O5 contained in the raw material be dissolved in the digested suspension (PC2) and as little as possible remains undissolved and be part of the first solid phase (C1) after the separation step (S1). This can be quantified by a P₂O₅-loss ratio (m(P₂O₅)_{c1} / m(P₂O₅)_{PC1}) of a total mass (m(P₂O₅)_{C1}) of phosphorus in the first solid phase (C1) to a total mass (m(P₂O₅)_{PC1}) of phosphorus in the raw material (PC1). For example, the P₂O₅-loss ratio can be comprised between 1 % and 30 %, preferably between 1.5% and 25 %, more preferably between 2% and 20%, most preferably between 2.5 % and 15 %; most preferably between 3 and 10%; most preferably 5 and 8%, most preferably 6 and 7%.

The efficacy of the process also depends on the amounts of impurities other than CaO which can be separated from the digested suspension (PC2). The reaction of CaO with H2SO4 precipitates calcium sulphates which are separated from the digested suspension (PC2) at the separation step (S1). The lower the proportion of calcium sulphate in the cake (= first solid phase (C1), the higher the amounts of impurities other than CaO have been separated from the digested suspension (PC2). This can be quantified with a calcium sulphate weight ratio (m(CaSO₄) / m(C1)) of a total mass (m(CaSO₄) of CaSO₄.nH₂O (with n = 0 to 2) in the first solid phase (C1) to a total mass (m(C1)) of the first solid phase (C1). A low value of the calcium sulphate weight ratio is representative of a high amount of impurities other than CaO in the cake. For example, the calcium sulphate weight ratio can be less than 97 wt.%, preferably comprised between 5 wt.% and 90 wt.%, between 10 wt.% and 85 wt.%, between 15 wt.% and 75 wt.%, more preferably between 50 wt.% and 70 wt.%.

### BRIEF DESCRIPTION OF THE FIGURES

On these figures,
**Fig. 1** shows the process steps of the present invention in its broadest scope.
**Fig. 2** shows the process steps of a preferred embodiment of the present invention.
**Fig. 3** shows the process steps of another preferred embodiment.
**Fig. 4** shows the process steps of yet another preferred embodiment.
**Fig. 5** shows a graph plotting the filtering time and P₂O₅ loss as a function of the ratio H⁺(SA) / H⁺(L).

### DETAILED DESCRIPTION.

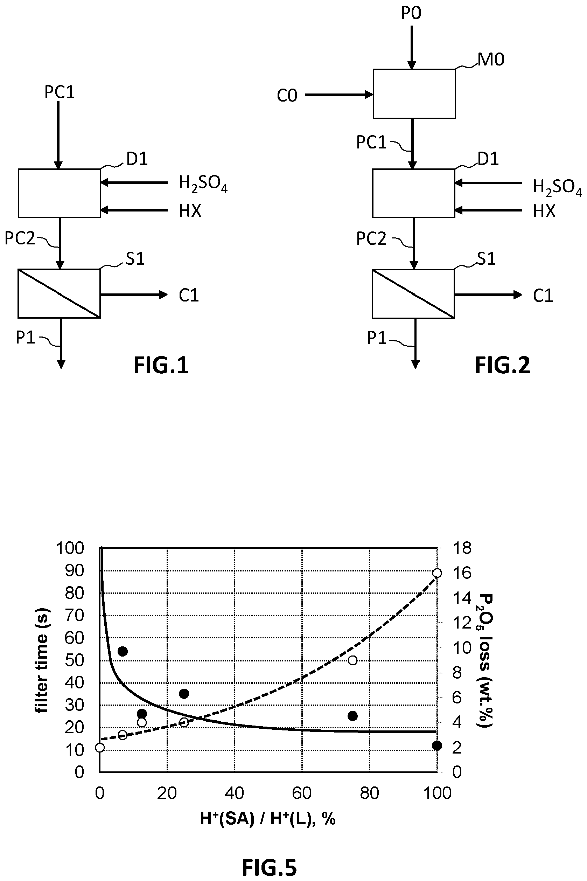

As shown in Figure 1, the process of the present invention for producing a phosphate containing product from a phosphate source (P0) comprises the following steps.

One or more reactors are fed with at least one raw material (PC1) issued from the phosphate source (P0). The at least one raw material (PC1) comprises,
- a phosphate required amount expressed in equivalent P₂O₅ amounts (= wt.% P₂O₅) of at least 5 wt.% P₂O₅, and
- a required calcium amount expressed in equivalent CaO amounts (= wt.% CaO) of at least 0.7 wt.% CaO.

In a digestion step (D1), the at least one raw material (PC1) is digested with a digestion liquor (L) in the one or more reactors. The digestion liquor (L) is an aqueous solution of sulphuric acid (H₂SO₄) and of one or more mineral acids (HX), wherein a ratio (H⁺(SA) / H⁺(L)) of a mole content of H⁺ issued from the sulphuric acid (= H⁺(SA)) to a total mole content of H⁺ ions in the digestion liquor (L) (= H⁺(L)) is comprised between 2 and 75%.

The digestion liquor (L) is added to the at least one raw material (PC1) in amounts such that a molar ratio (H⁺(L) / Ca) of the total amount of H⁺ ions in the digestion liquor (L) (= H⁺(L)) to a total amount of Ca atoms (= Ca) present in both digestion liquor (L) and at least one raw material (PC1) is comprised between 0.8 and 1.95 (i.e., H⁺(L) / Ca = 0.8 - 1.95), to form a digested suspension (PC2) comprising an aqueous phosphate rich solution (P1) comprising phosphate ions and a first solid phase (C1) containing calcium sulphate and impurities.

In a separation step (S1), the digested suspension (PC2) is separated into, on the one hand, the aqueous phosphate rich solution (P1) (= filtrate) and, on the other hand, the first solid phase (C1) (= residue).

In a preferred embodiment, the first solid phase (C1) is washed with water (counter- or co-current washing) before being stored or used.

### PHOSPHATE SOURCE (P0) AND RAW MATERIAL (PC1)

The phosphate source (P0) can be an ore or rock containing in particular calcium phosphate in the form of apatite (and derivatives thereof including fluoro, chloro, hydroxy, ... - apatite) or tri-calcium phosphate or dicalcium phosphate. It can be a phosphate salt such as ammonium phosphate salts, sodium phosphate salts, aluminium phosphate salts, iron phosphate salts, aluminium and iron phosphates salts, struvite or a mixture of salts and the like, or it can be a phosphate containing ash obtained by burning in a waste incineration plant phosphate-containing sewage sludges, biodegradable wastes, bio-wastes and/or animal wastes, in particular animal bones. A given phosphate source (P0) can be used alone or admixed with a second or more phosphate source(s) (P02) of different origin(s). The admixing can occur either prior to feeding the phosphate sources (P0, P02) into the one or more reactors, or in the one or more reactors.

In one embodiment, the phosphate source (P0) contains calcium in an amount of at least the required calcium amount. This can typically be the case if the phosphate source is a phosphate ore. In this case, the phosphate source (P0) forms the at least one raw material (PC1) and needs not be treated by addition of any calcium source (i.e., PC1 = P0).

In an alternative embodiment, the phosphate source (P0) contains less than the required calcium amount. This can be the case with ashes, depending on their origins and with ammonium or sodium salts. In these cases, the at least one raw material (PC1) is formed in a **raw material formation step (M0)** illustrated in Figures 2 to 4 by addition of a calcium compound (C0) to the phosphate source (P0) to form the at least one raw material (PC1) with the required amounts of calcium (i.e., PC1 c P0 + C0). The calcium compound can be chosen among,
- lime derivatives including quick lime, slaked lime, pulverized lime, lime milk, finely ground limestone, as a pure product or as a residue,
- calcium carbonate,
- calcium phosphates (mono-, di-, tri),
- kaolin,
- calcium hydroxide,
- calcium sulphate,
- calcium fluoride,
- a second phosphate source (P02) containing calcium,
- the aqueous phosphate rich solution (P1), or
- a mixture thereof.

Alternatively, or concomitantly, a portion of the aqueous phosphate rich solution (P1) can be recirculated into the digestion step (D1) as a component of the digesting liquor or as a calcium source. The portion of the aqueous phosphate rich solution (P1) which is recirculated is preferably comprised between 1 and 50 wt.%, more preferably between 5 and 30 wt.%, most preferably between 10 and 20 wt. %.

Alternatively, or concomitantly, the entire wash filtrate quantity or a portion of the wash filtrate of the first solid phase can be recirculated into the digestion step (D1) as a component of the digesting liquor or as a calcium source. The portion of the wash filtrate which is recirculated is preferably comprised between 1 and 75 wt.%, more preferably between 5 and 50 wt.%, more preferably between 10 and 30 wt.%, most preferably between 15 and 20 wt. %.

Regardless of the origin of the calcium, the at least one raw material (PC1) comprises calcium in amounts preferably comprised between 0.7 wt.% and 60 wt.% CaO, more preferably between 1 and 57.5 wt.% CaO; more preferably between 1.5 and 55 wt.% CaO, more preferably between 2 and 52,5 wt.% CaO; more preferably between 3 and 50 wt.% CaO; more preferably between 6 and 47,5 wt.% CaO more preferably between 10 and 45 wt.% CaO, more preferably between 15 and 35 wt.% CaO, and most preferably between 17.5 and 30 wt.% CaO.

The at least one raw material (PC1) can comprise a total amount as P₂O₅ of phosphate preferably comprised between 10 and 50 wt.% P₂O₅, preferably between 12 and 45 wt.% P₂O₅, more preferably between 14 and 40 wt.% P₂O₅, more preferably between 15 and 38 wt.% P₂O₅, more preferably between 18 and 35 wt.% P₂O₅, , more preferably between 19 and 30 wt.% P₂O₅, more preferably between 20 and 27.5 wt.% P₂O₅, more preferably between 22.5 and 25 wt.% P₂O₅.

### DIGESTION STEP (D1) AND DIGESTION LIQUOR (L)

The digestion liquor (L) used in the digestion step (D1) must comprise sulphuric acid (H₂SO₄) and one or more mineral acids (HX). The sulphuric acid is present in an amount such that a ratio (H⁺(SA) / H⁺(L)) of a mole content of H⁺ issued from the sulphuric acid (= H⁺(SA)) to a total mole content of H⁺ ions in the digestion liquor (L) (= H⁺(L)) is comprised between 2 and 75%, preferably between 5% and 70%, preferably between 7% and 60%, more preferably between 10 and 50%, more preferably between 12% and 40%; more preferably between 15% and 30%, most preferably between 18% and 25%.

Sulphuric acid can be pure or residual, i.e. generated by washing installations or during routine production or maintenance operations in industries such as metallurgy, food processing, pharmaceuticals, chemicals, and particularly sulphuric acid production or phosphoric acid production.

The one or more mineral acids (HX) can be chosen among hydrochloric acid, nitric acid, phosphoric acid, fluosilicic acid, hydrofluoric acid, the aqueous phosphate rich solution (P1), the wash filtrate of the first solid phase (C1) or a combination thereof.

The one or more mineral acids can be derived from aqueous solutions of acidic calcium chloride. For example, an aqueous phase (A1) resulting from a DCP separation step (S2) discussed more in detail in continuation, after precipitation of dicalcium phosphate (= DCP) by neutralisation (N1) with a base, which can be recirculated from the same process line, or from a separate process line.

The one or more mineral acids can also be derived from a residual aqueous solution containing PO₄-ions from industries or agro-industries, qualified as residual because they contain impurities of the following types: heavy metals, fluorescents, carbons, chlorides, and the like or because the P₂O₅ content of these solution is too low (such as for example, less than 20wt %, or less than 15wt %, less than 10 wt %, preferably less than 5wt%). Such solutions can generally not be used as such in the production of pure phosphoric acid or in the production of pure phosphate salts.

This solution can be generated by washing installations or during routine production or maintenance operations in industries such as metallurgy, food processing, pharmaceuticals, chemicals, and particularly in the production of phosphate salts or fertilisers or the production of DCP (for example with the present process).

The one or more mineral acids can comprise any one of the foregoing acids, and any mixture thereof. In a preferred embodiment, however, the mineral acid (HX) comprises hydrochloric acid, and preferably, hydrochloric acid alone. In an alternative embodiment, the mineral acid (HX) comprises hydrofluoric acid, and preferably, hydrofluoric acid alone. In yet an alternative embodiment, the mineral acid (HX) comprises fluosilicic acid, and preferably, fluosilicic acid alone.

The digestion step (D1) can advantageously occur at atmospheric pressure. The digestion temperature can be quite low, such as lower than 100°C, preferably lower than 70°C, more preferably between 30°C and 65°C; more preferably between 40°C and 60°C; more preferably between 45°C and 50°C.

The digestion step (D1) can be quite rapid with a duration lower than 180 min, preferably lower than 90 min, more preferably lower than 60 min, more preferably lower than 45 min, and wherein the duration is preferably at least 5 min, more preferably at least 10 min.

The acid concentrations in the digestion liquor (L) needs be controlled. For example, a combined concentration of the sulphuric acid and the one or more mineral acids in the digestion liquor (L) can be less than 20 wt.%, preferably less than 15 wt.%, more preferably less than 10 wt.%. The combined concentration can be at least 2%, more preferably at least 5%.

The amounts of acids in the digestion liquor (L) can be related to the amount of undesired calcium to be removed from the system. For example, a molar ratio (H⁺(L) / Ca) of the mole content of H⁺ present in the digestion liquor (= H⁺(L)) to the calcium atoms in both digestion liquor and at least one raw material (PC1) is comprised between 1.3 and 1.9, preferably 1.7 and 1.8, more preferably between 1.5 and 1.6.

The one or more reactors can be fed in different manners. In a first embodiment, the digestion liquor is formed by mixing the aqueous solution of sulphuric acid (H₂SO₄) and the aqueous solution of one or more mineral acids (HX) prior to feeding into the one or more reactors.

In an alternative embodiment, the digestion liquor can be formed and mixed in the one or more reactors. For example, the aqueous solution of sulphuric acid (H₂SO₄) can first be fed to the one or more reactors, followed by the aqueous solution of one or more mineral acids (HX). Alternatively, the aqueous solution of one or more mineral acids (HX) can be fed first to the one or more reactors, followed by the aqueous solution of sulphuric acid (H₂SO₄). Finally, the aqueous solution of sulphuric acid (H₂SO₄) and the aqueous solution of one or more mineral acids (HX) can be fed to the one or more reactors simultaneously, without being mixed beforehand. In another alternative embodiment, one reactor is fed with the aqueous solution of sulphuric acid (H₂SO₄) and the aqueous solution of one or more mineral acids (HX) simultaneously, without being mixed beforehand and the digested suspension (PC2) is fed into one or more reactors before being separated. More than one reactor can be arranged in series. The raw material (PC1) and digestion liquor (L) can be fed to a first reactor, and the thus formed suspension can be transferred from the first reactor to the following reactors in series. This method increases the digestion time accordingly. In an alternative embodiment, the sulphuric acid or all or a selection of the one or more mineral acids (HX) can be fed in the first reactor with the raw material, and the remaining acid components forming the digestion liquor can be added to successive reactors, as the suspension travels from one reactor to the next one. It is, however, preferred to contact the raw material (PC1) with all the components of the digestion liquor (L) in the first reactor.

The present invention applies to any raw material (PC1), including raw materials comprising substantial amounts of impurities. In a raw material (PC1) comprising substantial amounts of impurities, it is advantageous that as much P₂O₅ be dissolved in the aqueous phosphate rich solution (P1), and as much impurities as possible do not dissolve and remain in the first solid phase (C1) separated from the aqueous phosphate rich solution (P1) after the separation step (S1)..

For example, the efficacy of the P₂O₅ recovery from the raw material can be quantified by a P₂O₅-loss ratio (m(P₂O₅)_{C1} / m(P₂O₅)_{PC1}) of a total mass (m(P₂O₅)_{C1}) of phosphorus in the first solid phase (C1) to a total mass (m(P₂O₅)_{PC1}) of phosphorus in the raw material (PC1). The P₂O₅-loss ratio defines the amount of P₂O₅ which does not dissolve and remains in the first solid phase (C1). The P₂O₅-loss ratio can be comprised between 1 % and 30 %, preferably between 1.5% and 25 %, more preferably between 2% and 20%, most preferably between 2.5 % and 15 %; most preferably between 3 and 10%; most preferably 5 and 8%, most preferably 6 and 7%. Alternatively, the first solid phase (C1) can comprised between 0.25 wt.% and 10 wt.% P₂O₅, preferably between 0.3 wt.% and 7 wt.% P₂O₅, more preferably between 0.5 wt.% and 5 wt.% P₂O₅, most preferably between 0.7 wt.% and 3 wt.% P₂O₅..

Since substantially all CaO present in the raw material which reacts with H₂SO₄ precipitates as calcium sulphate, the cake, which forms the first solid phase (C1), comprises substantial amounts of calcium sulphates, depending on the amounts of CaO present in the raw material (PC1) relative to the impurities. It follows that a raw material comprising little impurities other than CaO, will form a cake comprising high proportions of calcium sulphates, whilst the proportion of calcium sulphates in the cake decreases with increasing amounts of impurities in the raw material which are successfully separated into the first solid phase (C1). The proportion of calcium sulphates present in the cake (or first solid phase (C1)) can be quantified by a calcium weight ratio (m(CaSO₄) / m(C1)) of a total mass (m(CaSO₄) of CaSO₄.nH₂O (with n = 0 to 2) in the first solid phase (C1) to a total mass (m(C1)) of the first solid phase (C1). For example, the calcium weight ratio (m(CaSO₄) / m(C1)) can be less than 97 wt.%, preferably comprised between 5 wt.% and 90 wt.%, between 10 wt.% and 85 wt.%, between 15 wt.% and 75 wt.%, more preferably between 50 wt.% and 70 wt.%.

### SEPARATION STEP (S1)

Digestion of the raw material (PC1) forms a digested suspension (PC2) comprising an aqueous phosphate rich solution (P1) comprising phosphate ions and a first solid phase (C1) containing among others calcium sulphate and impurities. The aqueous phosphate rich solution (P1) must be separated from the first solid phase (C1) in a separation step (S1) as shown in Figures 1 to 4. The separation step (S1) can be carried out in a separation unit selected among any one of a decantation unit, a vacuum belt filter, a press filter, a membrane press filter, or a centrifuge.

Compared with a digested suspension of the prior art treated with hydrochloric acid (= HCI) alone, the digested suspension (PC2) of the present invention obtained with the present digestion step (D1) can be filtered quicker and more efficiently. Without wishing to be bound by any theory, it is believed that this is due to the presence in the solid phase (C1) of crystallized solids (calcium sulphate and preferably gypsum) rather than a mud of impurities obtained with the prior art digestion steps with e.g., HCI alone.

The solid phase (C1) can be discarded or further processed for other applications. Depending on the nature of the phosphate source (P0) and the amounts of impurities present therein, the aqueous phosphate rich solution (P1) can be further processed to yield desired phosphate containing end-products of desired purities. For example, the aqueous phosphate rich solution (P1) can be concentrated and purified by means of well-known phosphoric acid purification steps. In an alternative embodiment, the aqueous phosphate rich solution (P1) can be neutralized in a neutralization step (N1) described in continuation.

### NEUTRALIZATION STEP (N1) OF THE AQUEOUS PHOSPHATE RICH SOLUTION (P1)

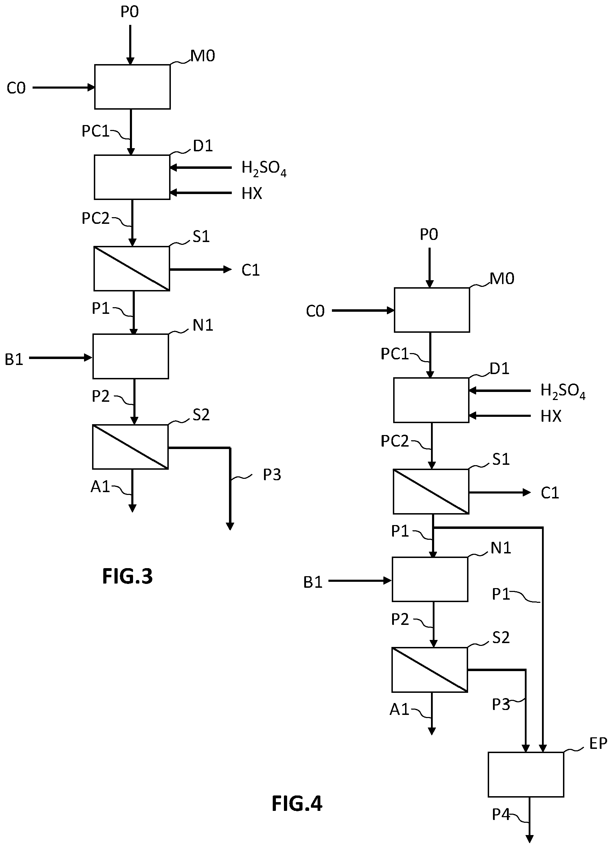

The process of the present invention can be used for the preparation of a dicalcium phosphate (DCP). To this purpose, the process illustrated in Figures 3 and 4 further comprises a neutralization step (N1), wherein the aqueous phosphate rich solution (P1) is neutralized at a pH sufficient to form a DCP-suspension (P2) comprising an aqueous phase (A1) and a DCP-rich solid phase (P3) comprising DCP. The DCP-rich solid phase (P3) is separated from the aqueous phase (A1) of the DCP-suspension (P2) in a DCP separation step (S2).

The neutralisation step (N1) is performed in presence of a source of calcium (B1) to reach a pH preferably comprised between 3 and 6. The source of calcium (B1) can be chosen among,
- Lime derivatives including quick lime, slaked lime, lime, lime milk, as pure product or as residue.
- calcium carbonate or limestone,
- calcium hydroxide as pure product or as residue,
- calcium phosphate,
- a mixture thereof.

In an embodiment of the process illustrated in Figure 4, the aqueous phosphate rich solution (P1) or the DCP-rich solid phase (P3) is further processed in an end process (EP) to produce an endproduct (P4) selected among,
- a fertilizer, preferably of type monoammonium phosphate (MAP), diammonium phosphate (DAP), Ammonium-Potassium Phosphate fertilizer (NPK fertilizer),
- animal feed,
- food grade product,
- merchant grade or purified phosphoric acid or technical grade phosphoric acid.

### EXAMPLE

A rock (ore) from Morocco referenced as K09 was used as phosphate source (P0) and as raw material (PC1) for the following examples (= Ex. 2 to 5) and comparative examples (= CEx.1 and 6). The analyses results of a selection of compounds contained in the rock are listed in Table 1.

Samples of m = 100 g of the K09-rock were digested in different digestion liquors as listed in Table 2, for a duration t = 30 min at a temperature T = 60°C. In all cases the acids concentration, both HX and H₂SO₄, was 6 wt.%, and the ratio (H⁺(L) / Ca) of the total amount of H⁺ ions in the digestion liquor (L) (= H⁺(L)) to the total amount of Ca atoms (= Ca) present in the rock (the digestion liquors (L) did not comprise any Ca atoms) was equal to 1.8.

**Table 1: analyses results of a selection of compounds contained in ore from Morocco (ref. K09) used in the present examples**

| Al₂O₃ wt.% | CaO wt.% | Fe₂O₃ wt.% | MgO wt.% | P₂O₅ wt.% |
|---|---|---|---|---|
| 0.35 | 50 | 0.231 | 0.785 | 29.7 |

The liquors of (comparative) Examples 1 to 6 were all composed of sulphuric acid and hydrochloric acid in the molar concentrations listed in Table 2. Table 2 also lists the filtration times and P₂O₅ losses (calculated from the solid masses and P₂O₅ in the solid). P₂O₅ losses are defined in this step as P2O5 masses lost in solid phase divided by P2O5 masses coming from raw materials (here phosphate sources). Filtration is carried out with a Buchner filter and all filtration parameters (surface, pore diameter, and the like) are maintained constant.

**Table 2: compositions of the liquors and filter times and P2O5 loss in (comparative) Examples 1 to 6**

| **#** | **H⁺(SA)** | **H⁺(HCl)** | **Filter time** | **cake** | **P₂O₅ in cake** | **P₂O₅ losses** |
|---|---|---|---|---|---|---|
| | **mol.%** | **mol.%** | **s** | **g** | **wt.%** | **wt.%** |
| C.Ex1 | 0 | 100 | **740** | 27.2 | 2.36 | **2** |
| Ex.2 | 6.75 | 93.25 | **54** | 23.05 | 3.5 | **3** |
| Ex.3 | 12.5 | 87.5 | **26** | 28.7 | 3.85 | **4** |
| Ex.4 | 25 | 75 | **35** | 44.2 | 2.4 | **4** |
| Ex.5 | 75 | 25 | **25** | 115.5 | 2.19 | **9** |
| CEx.6 | 100 | 0 | **12** | 138.7 | 3.4 | **16** |

Table 2 lists the liquor compositions used in the examples and comparative examples. The liquors in CEx.1 and CEx.6 comprise sulphuric acid only and hydrochloric acid only, respectively, and are therefore not according to the present invention. The liquors of Ex.2 to Ex.5 comprise both sulphuric acid and hydrochloric acid and are according to the present invention.

Table 2 lists for each of the (comparative) examples 1 to 6 the filtration times required for separating the digested suspension (PC2) into, on the one hand, the aqueous phosphate rich solution (P1) and, on the other hand, the first solid phase (C1). Table 2 also lists the resulting P₂O₅ losses which remained in the first solid phase and is not dissolved in the aqueous phosphate rich solution (P1). Figure 5 illustrates graphically the results listed in Table 2, showing the filtration times (= black circles, solid line - left-hand ordinate axis) and P₂O₅ losses (= white circles, dashed line - right-hand ordinate axis) as a function of the amount of sulphuric acid in the digestion liquor expressed in terms of the ratio (H⁺(SA) / H⁺(L)) of the mole content of H⁺ issued from the sulphuric acid (= H⁺(SA)) to the total mole content of H⁺ ions in the digestion liquor (L) (= H⁺(L)). Note that for sake of clarity, the maximum of the left-hand ordinate axis of filter time is set to 100 s, well below the filter time of 740 s measured with CEx.1.

It can be seen from Table 2 and Figure 5, that digesting a rock with a digestion liquor (L) comprising HCI only (i.e., CEx.1 with H⁺(SA) / H⁺(L) = 0) has the effect of increasing substantially the filtering time to 740 s versus 12 s when the digestion liquor (L) comprises H₂SO₄ only (i.e., CEx.6 with H⁺(SA) / H⁺(L) = 100%). Digesting the rock with a liquor comprising H₂SO₄ only (i.e., CEx.6 with H⁺(SA) / H⁺(L) = 100%), however, increases the P₂O₅ losses to 16% versus 2% when the digestion liquor (L) comprising HCI only (i.e., CEx.1 with H⁺(SA) / H⁺(L) = 0).

Using a digestion liquor (L) comprising a mixture of H₂SO₄ with a mineral acid (HX) (here HX = HCI) yields a digested suspension (PC2) which can be separated within industrialisable time durations (Ex.2 to Ex.5: t = 12 to 35 s), with limited losses of P₂O₅ (Ex.2 to Ex.5: P₂O₅ loss = 2 to 9 wt.%). These results clearly demonstrate that the method of the present invention, including digesting a source of phosphate with a digestion liquor comprising both H₂SO₄ and a mineral acid (HX) present in a ratio ratio, H⁺(SA) / H⁺(L), comprised between 2 and 75% is clearly advantageous over digestion liquors comprising both components outside the claimed ratio. The method of the present invention is therefore unexpectedly advantageous over prior art methods.

| **REF** | **DESCRIPTION** |
|---|---|
| A1 | Aqueous phase (after step N1) |
| C0 | Calcium compound |
| C1 | First solid phase containing calcium sulphate and impurities |
| Ca | Total amount of Ca atoms |
| D1 | Digestion step |
| DCP | Dicalcium phosphate |
| EP | End process |
| HX | Mineral acid |
| H⁺(L) | Mole content of H⁺ issued from both sulphuric acid and one or more mineral acids |
| H⁺(SA) | Mole content of H⁺ issued from the sulphuric acid |
| M0 | Raw material formation step |
| N1 | Neutralization step |
| P0 | Phosphate source |
| P1 | Aqueous phosphate rich solution (after step S1) |
| P2 | DCP-suspension (after step N1) |
| P3 | DCP-rich solid phase (after step S2) |
| P4 | End product |
| PC1 | Raw material |
| PC2 | Digested suspension (after step D1) |
| S1 | Separation step |
| S2 | DCP separation step |

## Claims

1. A process for producing a phosphate containing product from a phosphate source (P0), the process comprising the following steps:
• feeding one or more reactors with at least one raw material (PC1) issued from the phosphate source (P0), the at least one raw material comprising a phosphate required amount expressed in equivalent P₂O₅ amounts (= wt.% P₂O₅) of at least 5 wt.% P₂O₅, and a required calcium amount expressed in equivalent CaO amounts (= wt.% CaO) of at least 0.7 wt.% CaO,
• in a digestion step (D1), digesting the at least one raw material (PC1) with a digestion liquor (L) in the reactor, wherein the digestion liquor (L),
∘ is an aqueous solution of sulphuric acid (H₂SO₄) and of one or more mineral acids (HX), wherein a ratio (H⁺(SA) / H⁺(L)) of a mole content of H⁺ issued from the sulphuric acid (= H⁺(SA)) to a total mole content of H⁺ ions in the digestion liquor (L) (= H⁺(L)) is comprised between 2 and 75%,
∘ is added to the at least one raw material (PC1) in amounts such that a molar ratio (H⁺(L) / Ca) of the total amount of H⁺ ions in the digestion liquor (L) (= H⁺(L)) to a total amount of Ca atoms (= Ca) present in both digestion liquor (L) and at least one raw material (PC1) is comprised between 0.8 and 1.95 (i.e., H⁺(L) / Ca = 0.8 - 1.95), to form a digested suspension (PC2) comprising an aqueous phosphate rich solution (P1) comprising phosphate ions and a first solid phase (C1) containing calcium sulphate and impurities,
• In a separation step (S1), separating the digested suspension (PC2) into, on the one hand, the aqueous phosphate rich solution (P1) and, on the other hand, the first solid phase (C1).

2. Process according to claim 1, wherein the solid phosphate source (P0) either:
• contains calcium in an amount of at least the required calcium amount and thus forms the at least one raw material (PC1) (i.e., PC1 = P0), or
• contains less than the required calcium amount, and the at least one raw material (PC1) is formed in a raw material formation step (M0) by addition of a calcium compound (C0) to the phosphate source (P0) to form the at least one raw material (PC1) with the required amounts of calcium (i.e., PC1 c P0 + C0), wherein the calcium compound is chosen among:
∘ lime derivatives including quick lime, slaked lime, pulverized lime, lime milk, finely ground limestone
∘ calcium carbonate,
∘ calcium phosphates salts (mono -; di-; tri-),
∘ kaolin,
∘ calcium hydroxide,
∘ calcium sulphate,
∘ calcium fluoride,
∘ a second phosphate source (P02) containing calcium,
∘ the aqueous phosphate rich solution (P1),
∘ phosphoric acid,or
∘ a mixture thereof.

3. Process according to claim 1 or 2, wherein the one or more mineral acids (HX) are chosen among hydrochloric acid, phosphoric acid, fluosilic acid, hydrofluoric acid, the aqueous phosphate rich solution (P1), the wash filtrate of the first solid phase (C1), or a combination thereof, and preferably comprises hydrochloric acid, more preferably, hydrochloric acid alone

4. Process according to any one of the preceding claims, wherein a portion of the aqueous phosphate rich solution (P1) is recirculated into the digestion step (D1) as a component of the digesting liquor or as a calcium source, wherein the portion of the aqueous phosphate rich solution (P1) being recirculated is preferably comprised between 1 and 50%, more preferably between 5 and 30%, most preferably between 10 and 20%.

5. Process according to any one of the preceding claims, wherein the at least one raw material (PC1) comprises phosphate in amounts comprised between 10 and 50 wt.% P₂O₅, preferably between 12 and 45 wt.% P₂O₅, more preferably between 14 and 40 wt.% P₂O₅, more preferably between 15 and 38 wt.% P₂O₅, more preferably between 18 and 35 wt.% P₂O₅, , more preferably between 19 and 30 wt.% P₂O₅, more preferably between 20 and 27.5 wt.% P₂O₅, more preferably between 22.5 and 25 wt.% P₂O₅.

6. Process according to any one of the preceding claims, wherein the phosphate source (P0) is chosen among one or more of the following origins:
• phosphate ores,
• phosphate salts,
• ashes, preferably ashes from one or more of incinerated sewage sludge, bones, manure, and wherein the phosphate source (P0) is used alone or admixed with a second phosphate source (P02) of different origin than the phosphate source, wherein the admixing occurs either in the reactor or prior to feeding the phosphate source (P0) into the reactor.

7. Process according to any one of the preceding claims, wherein the digestion step (D1) occurs at atmospheric pressure and at a temperature lower than 100°C, preferably lower than 70°C, more preferably between 30°C and 65°C; more preferably between 40°C and 60°C; more preferably between 45°C and 50°C.

8. Process according to any one of the preceding claims, wherein the digestion step (D1) has a duration lower than 180 min, preferably lower than 90 min, more preferably lower than 60 min, more preferably lower than 45 min, and wherein the duration is preferably at least 5 min, more preferably at least 10 min.

9. Process according to any one of the preceding claims, wherein a combined concentration of the sulphuric acid and the one or more mineral acids in the digestion liquor (L) is less than 20 wt.%, preferably less than 15 wt.%, more preferably less than 10 wt.%, and is preferably at least 2%, more preferably at least 5%.

10. Process according to any one of the preceding claims, wherein the ratio (H⁺(SA) / H⁺(L)) of the mole content of H⁺ issued from the sulphuric acid (= H⁺(SA)) to the total amount of H⁺ ions in the digestion liquor (L) (= H⁺(L) is comprised between 5% and 70%, preferably between 7% and 60%, more preferably between 10 and 50%, more preferably between 12% and 40%; more preferably between 15% and 30%, most preferably between 18% and 25%.

11. Process according to any one of the preceding claims, wherein, in the digesting (D1) step, a molar ratio (H⁺(L)/ Ca) of the H⁺-ions (H⁺(L)) in the digestion liquor (L) to the calcium atoms in both digestion liquor and at least one raw material (PC1) is comprised between 1.3 and 1.9, preferably 1.7 and 1.8, more preferably between 1.5 and 1.6.

12. Process according to any one of the preceding claims, wherein the aqueous phosphate rich solution (P1) is neutralized in a neutralizing step (N1) to form dicalcium phosphate (DCP), wherein the neutralisation step (N1) is performed in presence of a source of calcium (B1) to reach a pH preferably comprised between 3 and 6, wherein the source of calcium (B1) is chosen among,
• lime derivatives including quick lime, slaked lime, pulverized lime, lime milk,
• calcium carbonate or finely ground limestone,
• calcium hydroxide,
• calcium phosphate, or
• a mixture thereof.

13. Process according to claim 12, wherein the DCP is further processed to produce,
• a fertilizer, preferably of type monoammonium phosphate (MAP), diammonium phosphate (DAP), Ammonium-Potassium Phosphate fertilizer (NPK fertilizer),
• animal feed,
• food grade products,
• merchant grade or purified phosphoric acid or technical grade phosphoric acid.

14. Process according to any one of the preceding claims, wherein the reactor is fed with:
• the digestion liquor formed by mixing the aqueous solution of sulphuric acid (H₂SO₄) and the aqueous solution of one or more mineral acids (HX) prior to feeding into the reactor; or
• the aqueous solution of sulphuric acid (H₂SO₄) first, followed by the aqueous solution of one or more mineral acids (HX), or
• the aqueous solution of one or more mineral acids (HX) first, followed by the aqueous solution of sulphuric acid (H₂SO₄), or
• the aqueous solution of sulphuric acid (H₂SO₄) and the aqueous solution of one or more mineral acids (HX) simultaneously, without being mixed before.

15. Process according to any one of the preceding claims, wherein
• a P₂O₅-loss ratio (m(P₂O₅)_{C1} / m(P₂O₅)_{PC1}) of a total mass (m(P₂O₅)_{C1}) of phosphorus in the first solid phase (C1) to a total mass (m(P₂O₅)_{PC1}) of phosphorus in the raw material (PC1) is comprised between between 1 % and 30 %, preferably between 1.5% and 25 %, more preferably between 2% and 20%, most preferably between 2.5 % and 15 %; most preferably between 3 and 10%; most preferably 5 and 8%, most preferably 6 and 7%, and or
• a calcium weight ratio (m(CaSO₄) / m(C1)) of a total mass (m(CaSO₄) of CaSO₄.nH₂O (with n = 0 to 2) in the first solid phase (C1) to a total mass (m(C1)) of the first solid phase (C1) is less than 97 wt.%, preferably comprised between 5 wt.% and 90 wt.%, between 10wt.% and 85 wt.%, between 15 wt.% and 75 wt.%, more preferably between 50 wt.% and 70 wt.%
